# EUROPÄISCHE PATENTANMELDUNG

(11) **EP 0 949 129 A2**
(43) Veröffentlichungstag der Anmeldung: **13.10.1999**
(21) Anmeldenummer: 99102761.6
(22) Anmeldetag: 22.02.1999
(51) Int. Cl.: B60S 1/50

(54) **Zur Befestigung in einem Kraftfahrzeug vorgesehener Waschflüssigkeitsbehälter**

(30) Priorität: 09.04.1998 DE 29806592 U; 20.01.1999 DE 29900879 U
(71) Anmelder: Mannesmann VDO Aktiengesellschaft, 60388 Frankfurt am Main (DE)
(72) Erfinder: Rau, Karl, 63165 Mülheim am Main (DE)
(74) Vertreter: Klein, Thomas, Dipl.-Ing.

(57) **Zusammenfassung**

Ein Waschflüssigkeitsbehälter (3) einer Scheibenreinigungsanlage eines Kraftfahrzeuges ist an einem Gehäuse (1) einer Frischluftansaugung (2) festgeschweißt. Weiterhin wird eine Wandung (11) des Waschflüssigkeitsbehälters (3) von dem Gehäuse (1) der Frischluftansaugung (2) gebildet. Hierdurch lässt sich der Waschflüssigkeitsbehälter (3) kostengünstig herstellen und sehr einfach im Kraftfahrzeug montieren.

## Beschreibung

Die Erfindung betrifft einen zur Befestigung in einem Kraftfahrzeug vorgesehenen Waschflüssigkeitsbehälter aus Kunststoff.

Solche Waschflüssigkeitsbehälter werden als Vorratsbehälter beispielsweise für eine Scheibenreinigungsanlage in heutigen Kraftfahrzeugen eingesetzt und sind damit bekannt. Der Waschflüssigkeitsbehälter besteht in der Regel aus einem thermisch verformbaren Kunststoff wie beispielsweise Polypropylen. Die Herstellung des Waschflüssigkeitsbehälters erfolgt meist im Blasverfahren, indem der Waschflüssigkeitsbehälter in einer Form aufgeblasen wird. Alternativ dazu ist es auch bekannt, den Waschflüssigkeitsbehälter im Spritzgussverfahren zu fertigen. Hierbei werden zunächst zwei Teile hergestellt und diese anschließend miteinander verbunden. Weiterhin sind an der Wandung des Waschflüssigkeitsbehälters Laschen angeordnet, mit denen der Waschflüssigkeitsbehälter mit einem Karosserieblech des Kraftfahrzeuges verschraubt wird.

Nachteilig bei dem bekannten Waschflüssigkeitsbehälter ist, dass er kostenintensiv zu montieren ist.

Der Erfindung liegt das Problem zugrunde, einen Waschflüssigkeitsbehälter der eingangs genannten Art so zu gestalten, dass er besonders einfach im Kraftfahrzeug zu montieren ist.

Dieses Problem wird erfindungsgemäß dadurch gelöst, dass der Waschflüssigkeitsbehälter zur Befestigung an einem Gehäuse einer Frischluftansaugung ausgebildet ist und mit dem Gehäuse in einem angrenzenden Bereich eine gemeinsame Wandung aufweist.

Durch diese Gestaltung lässt sich der Waschflüssigkeitsbehälter mit der Frischluftansaugung außerhalb des Kraftfahrzeuges zu einer Einheit vormontieren. Der Waschflüssigkeitsbehälter wird dann bei der Montage der Frischluftansaugung im Kraftfahrzeug montiert. Hierdurch gestaltet sich die Montage des erfindungsgemäßen Waschflüssigkeitsbehälters sehr einfach. Weiterhin führt die gemeinsame Wandung des Waschflüssigkeitsbehälters und des Gehäuses der Frischluftansaugung zu einer Einsparung an Material und Gewicht im Kraftfahrzeug. Ein weiterer Vorteil der Erfindung besteht darin, dass im Motorraum des Kraftfahrzeuges eine hohe Integrationsdichte erreicht wird. Hierdurch lassen sich mehr Bauteile oder ein Waschflüssigkeitsbehälter mit einem besonders großen Volumen in dem Motorraum anordnen.

Zur Verringerung der Fertigungskosten für den erfindungsgemäßen Waschflüssigkeitsbehälter trägt es bei, wenn er topfförmig gestaltet und mit seinem offenen Ende an dem Gehäuse der Frischluftansaugung abgedichtet ist. Durch diese Gestaltung lässt sich der erfindungsgemäße Waschflüssigkeitsbehälter besonders kostengünstig in einer einzigen axial entformbaren Spritzgussform herstellen.

Die Verbindung des erfindungsgemäßen Waschflüssigkeitsbehälters an dem Gehäuse der Frischluftansaugung lässt sich besonders einfach abdichten, wenn der Waschflüssigkeitsbehälter an seinem an das Gehäuse der Frischluftansaugung angrenzenden Bereich einen umlaufenden Flansch aufweist.

Zur weiteren Verringerung der Fertigungskosten des erfindungsgemäßen Waschflüssigkeitsbehälters trägt es bei, wenn der Waschflüssigkeitsbehälter mit dem Gehäuse der Frischluftansaugung verschweißt ist. Das Verschweißen kann beispielsweise bei bekannten thermisch verformbaren Kunststoffen durch Spiegelschweißen oder Ultraschallschweißen erfolgen. Weiterhin benötigt der erfindungsgemäße Waschflüssigkeitsbehälter hierdurch keine Laschen oder andere Verbindungselemente mehr zu seiner Befestigung.

Der erfindungsgemäße Waschflüssigkeitsbehälter lässt sich an nahezu beliebig gestalteten Gehäusen der Frischluftansaugung montieren, wenn er mit dem Gehäuse der Frischluftansaugung verklebt ist. Hierdurch kann der erfindungsgemäße Waschflüssigkeitsbehälter auch aus einem anderen Material gefertigt sein als das Gehäuse der Frischluftansaugung.

Gemäß einer anderen vorteilhaften Weiterbildung der Erfindung besteht der Waschflüssigkeitsbehälter aus Polypropylen (PP). Damit ist der Behälter besonders gut im Spritzgießverfahren auf einfache Weise herstellbar und läßt sich gut mit der Frischluftansaugung verschweißen, wenn diese aus einem Kunststoff mit ähnlichen thermischen Eigenschaften besteht.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine perspektivische Darstellung eines erfindungsgemäßen Waschflüssigkeitsbehälters mit einem Gehäuse einer Frischluftansaugung,
- Fig. 2: den erfindungsgemäßen Waschflüssigkeitsbehälter aus Figur 1 in einer teilweise geschnittenen Seitenansicht.

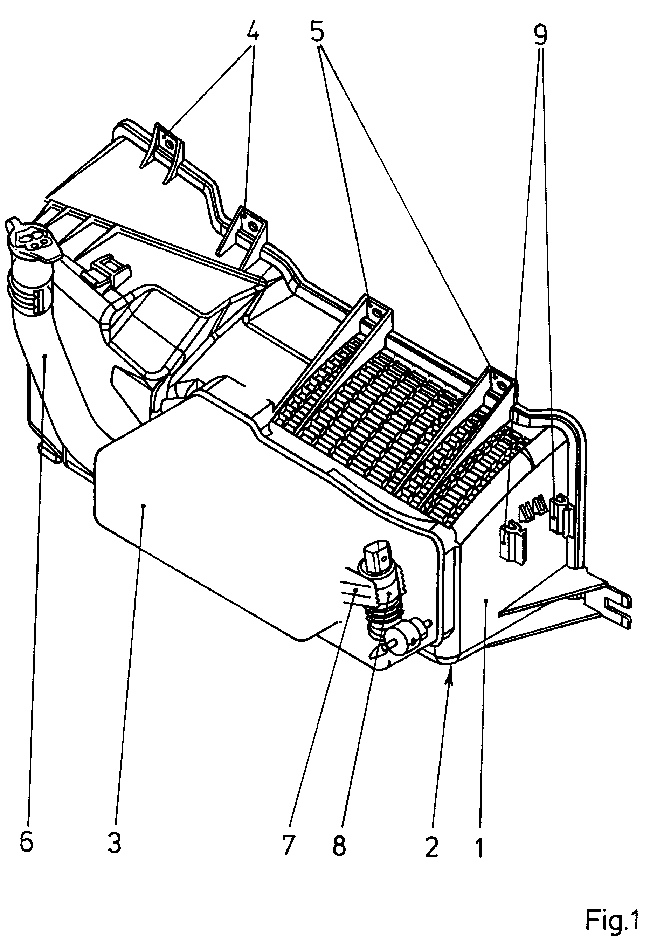

Die Figur 1 zeigt einen erfindungsgemäßen, an einem Gehäuse 1 einer Frischluftansaugung 2 befestigten Waschflüssigkeitsbehälter 3. Der Waschflüssigkeitsbehälter 3 und die Frischluftansaugung 2 bilden hierdurch eine bauliche Einheit, die sich an einer nicht dargestellten Stirnwand eines Kraftfahrzeuges montieren lässt. Hierfür hat das Gehäuse 1 der Frischluftansaugung 2 mehrere Befestigungslaschen 4, 5. Der Waschflüssigkeitsbehälter 3 weist einen zu seiner Befüllung vorgesehenen, an dem Gehäuse 1 festgeschweißten Einfüllstutzen 6 auf. Der Waschflüssigkeitsbehälter 3 ist einteilig mit einer Halterung 7 für eine Waschflüssigkeitspumpe 8 gefertigt. An dem Gehäuse 1 der Frischluftansaugung 2 sind beispielsweise für einen nicht dargestellten Bremsflüssigkeitsbehälter vorgesehene Halterungen 9 angeordnet.

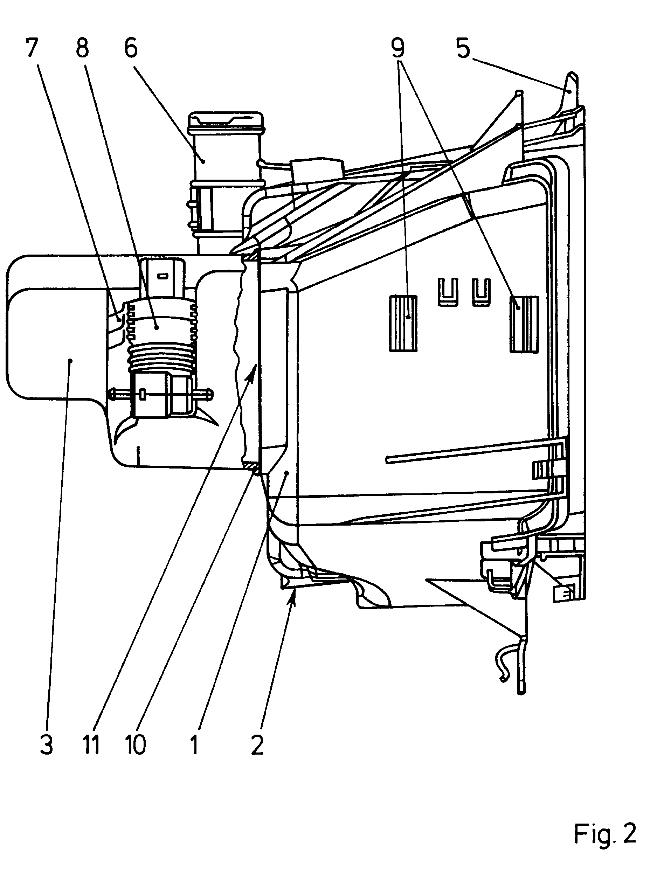

Die Figur 2 zeigt das Gehäuse 1 der Frischluftansaugung 2 und den Waschflüssigkeitsbehälter 3 aus Figur 1 in einer Seitenansicht von rechts. Der Waschflüssigkeitsbehälter 3 ist in seinem an dem Gehäuse 1 angrenzenden Bereich aufgeschnitten dargestellt. Hierbei ist zu erkennen, dass der Waschflüssigkeitsbehälter 3 einen Flansch 10 aufweist, mit dem er an dem Gehäuse 1 festgeschweißt oder festgeklebt ist. In diesem Bereich wird eine seitliche Wandung 11 des Waschflüssigkeitsbehälters 3 von dem Gehäuse 1 der Frischluftansaugung 2 gebildet. Das Gehäuse 1 ist im Bereich des Flansches 10 eben gestaltet. Weiterhin ist in Figur 2 zu erkennen, dass der Waschflüssigkeitsbehälter 3 vom Flansch 10 bis zu seinem von dem Flansch 10 entfernten Ende hin verjüngend gestaltet ist. Hierdurch lässt sich der erfindungsgemäße Waschflüssigkeitsbehälter 3 vor dem Verschweißen oder Verkleben mit dem Gehäuse 1 in einer axial entformbaren Spritzgussform herstellen.

## Patentansprüche

1. Zur Befestigung in einem Kraftfahrzeug vorgesehener Waschflüssigkeitsbehälter aus Kunststoff, **dadurch gekennzeichnet**, dass der Waschflüssigkeitsbehälter (3) zur Befestigung an einem Gehäuse (1) einer Frischluftansaugung (2) ausgebildet ist und mit dem Gehäuse (1) in einem angrenzenden Bereich eine gemeinsame Wandung (11) aufweist.

2. Waschflüssigkeitsbehälter nach Anspruch 1, **dadurch gekennzeichnet**, dass er topfförmig gestaltet und mit seinem offenen Ende an dem Gehäuse (1) der Frischluftansaugung (2) abgedichtet ist.

3. Waschflüssigkeitsbehälter nach Anspruch 1 oder 2, **dadurch gekennzeichnet**, dass er an seinem an das Gehäuse (1) der Frischluftansaugung (2) angrenzenden Bereich einen umlaufenden Flansch (10) aufweist.

4. Waschflüssigkeitsbehälter nach einem der vorhergehenden Ansprüche, **dadurch gekennzeichnet**, dass er mit dem Gehäuse (1) der Frischluftansaugung (2) verschweißt ist.

5. Waschflüssigkeitsbehälter nach einem der vorhergehenden Ansprüche, **dadurch gekennzeichnet**, dass er mit dem Gehäuse (1) der Frischluftansaugung (2) verklebt ist.

6. Waschflüssigkeitsbehälter nach einem der vorhergehenden Ansprüche, **dadurch gekennzeichnet**, dass er aus Polypropylen (PP) besteht.
